# EUROPEAN PATENT APPLICATION

(11) **EP 3 051 734 A1**
(43) Date of publication of application: **03.08.2016**
(21) Application number: 15305104.0
(22) Date of filing: 29.01.2015
(51) Int. Cl.: H04L 1/18, H04L 1/00

(54) **POINT TO MULTI-POINT WIRELESS TRANSMISSIONS**

(71) Applicant: ALCATEL LUCENT, 92100 Boulogne-Billancourt (FR)
(72) Inventor: WORRALL, Chandrika, Swindon, Wiltshire SN5 7DJ (GB)
(74) Representative: Script IP Limited

(57) **Abstract**

The invention relates to the field of wireless communications and in particular to point to multipoint (PTM) transmissions within a single cell. Abase station method is provided which comprises: transmitting an indication to a group of user equipment within a cell supported by the base station, the indication identifying resources in an uplink channel where a reception indication is to be transmitted by the group of user equipment relating to data packets transmitted by the base station to the group of user equipment; transmitting a data packet to the group of user equipment within a cell supported by the base station; and monitoring the resources to determine a reception status of the data packet by the group of user equipment based on detection of the reception indication transmitted using the resources. In this way, the group of user equipment can be provisioned to transmit a reception indicator indicating the reception status of a data packet transmitted to the group of user equipment, the indication being transmitted using resources in an uplink channel allocated to that group of user equipment by the base station. The base station can then monitor those resources in order to determine whether the group of user equipment successfully received the data packet or not. This enables group feedback to be provided for single cell PTM transmissions.

## Description

### FIELD OF THE INVENTION

The invention relates to the field of wireless communications and in particular to point to multipoint (PTM) transmissions within a single cell.

### BACKGROUND

Transmissions from a network node directed to single user equipment, unicast services, are known and they rely on feedback mechanisms and retransmission of data to enable user equipment in areas of high attenuation to successfully receive data.

The Multimedia broadcast multicast service (MBMS) is designed to provide efficient delivery of broadcast and multicast services to a plurality of user equipment within a plurality of network cells.

Single cell point to multipoint PTM transmission is a multicast service where transmissions are to a group of user equipment within a single cell. Such transmissions may be used in a variety of circumstances such as for public safety transmissions. The successful receipt of such transmissions by all user equipment within a group may be problematic as these transmissions do not benefit from the spectral efficiencies of the multiple cell MBMS transmissions.

### SUMMARY

According to a first aspect, there is provided a base station method, comprising: transmitting an indication to a group of user equipment within a cell supported by the base station, the indication identifying resources in an uplink channel where a reception indication is to be transmitted by the group of user equipment relating to data packets transmitted by the base station to the group of user equipment; transmitting a data packet to the group of user equipment within a cell supported by the base station; and monitoring the resources to determine a reception status of the data packet by the group of user equipment based on detection of the reception indication transmitted using the resources.

The first aspect recognizes that current techniques which support single cell PTM transmission fail to do so in a radio-efficient manner. Although it may be that the radio efficiency resulting from the use of single cell PTM ought to be better than that of eMBMS, eMBMS uses synchronous waveform transmission in an MBSFN area where waveform combining over the air-interface is used to achieve high spectral efficiency. However, when using single cell PTM, waveform combining gain due to MBSFN transmission is lost. In unicast transmission, a hybrid automatic repeat request (HARQ) feedback process is used to achieve high radio efficiency, given that only unsuccessful packets are retransmitted and so the HARQ operating point can be set to achieve high radio efficiency in unicast. However, HARQ feedback for single cell PTM is not as straightforward as HARQ feedback for unicast transmissions, considering that a large number of user equipment are receiving PTM and these may each provide HARQ feedback. Additionally, the scalability requirement for PTM where a very large number of groups maybe present at a given time makes enabling HARQ for single cell PTM challenging.

Accordingly, a method for a base station is provided. The method may comprise transmitting an indication to a group of user equipment within a cell supported or provided by the base station. The indication may identify resources in an uplink channel. The resources in the uplink channel may be used for the transmission of a reception indicator. The reception indicator may be transmitted by user equipment within the group of user equipment. The reception indicator may relate to the reception of data packets transmitted by the base station to the user equipment of the group of user equipment. The method may also comprise multicast transmitting a data packet to the group of user equipment that are within a cell provided by the base station. The method may also comprise monitoring the resources to determine a reception status of the data packet by the user equipment within the group. The reception status may be determined based on the detection of the reception indicator transmitted using the resources. In this way, the group of user equipment can be provisioned to transmit a reception indicator indicating the reception status of the same data packet transmitted to the group of user equipment using multicasting, the indication being transmitted using resources in an uplink channel allocated to that group of user equipment by the base station. The base station can then monitor those resources in order to determine whether the group of user equipment successfully received the data packet or not. This enables group feedback to be provided for single cell PTM transmissions.

In one embodiment, a plurality of groups of user equipment are provided, the indication identifies each group of user equipment and resources of the uplink channel allocated to that group and the monitoring comprises monitoring the resources to determine a reception status of the data packets by each of the plurality of groups of user equipment based on detection of the reception indication transmitted using the resources allocated to that group. Accordingly, when more than one group of user equipment are provided within the cell, the indication identifies each group of user equipment and also identifies the resources allocated to that group. A single indication may be provided identifying all the resources for all the groups, or multiple indications may be provided, one for each group. In this way, each resource will carry an indication for a different group. Those resources may be monitored to determine a reception status of data packets transmitted separately to each of the groups. This enables the reception status of data packets to be monitored on a group-by-group basis.

In one embodiment, the method comprises allocating the same resources for use by a set of groups of user equipment and wherein: the transmitting the indication comprises transmitting the indication to the set of groups of user equipment within the cell supported by the base station, the indication identifying resources in the uplink channel where a reception indication is to be transmitted relating to data packets transmitted by the base station to the set of groups of user equipment; the transmitting the data packet comprises transmitting a data packet to each of the set of groups of user equipment within the cell supported by the base station; and the monitoring comprises monitoring the resources to determine a reception status of the data packets by the set of groups of user equipment based on detection of the reception indication transmitted using the resources allocated to the set of groups of user equipment. Accordingly, when insufficient resources are available to be allocated for every group within the cell, the resources may be multiplexed to be shared by a set of groups. Again, a single indication may be provided identifying all the resources for all the groups, or multiple indications maybe provided, one for each group or set of groups. This enables the reception status of data packets transmitted to the sets of groups to be monitored.

In one embodiment, a plurality of processes are employed for transmitting a corresponding data packet for that process to each group of user equipment within a cell supported by the base station and the indication identifies each process for each group of user equipment and resources of the uplink channel allocated in the uplink channel where a reception indication is to be transmitted by the group of user equipment relating to data packets transmitted by the base station for that process to each group of user equipment. Accordingly, where multiple processes are employed for transmitting multiple data packets (typically one data packet for each process) to a group of user equipment, then the indication may identify resources allocated for the transmission of the reception indication for each process. Again, a single indication may be provided identifying all the resources for all processes for all the groups, or multiple indications maybe provided, one for each process or group or set of groups. This enables the reception status of data packets for the individual processes to be monitored.

In one embodiment, the monitoring the resources comprises combining signals received using the resource to determine presence of the reception indication. Accordingly, the signals received using the resources can be combined in order to determine the reception indication.

In one embodiment, the reception indication comprises a HARQ NACK. Accordingly, the reception indicator may encode a HARQ NACK, indicating that the data packet has not been successfully received and decoded by the transmitting user equipment within that group.

In one embodiment, the method comprises re-transmitting the data packet when the signals received using the resource exceed a threshold amount and otherwise transmitting another data packet. Given that multiple user equipment may each transmit the reception indication using the same resource, the strength of the signal received using that resource may provide an indication of the number of user equipment which failed to successfully receive and decode the data packet. Accordingly, a threshold may be set such that the data packet is only retransmitted when a particular number of user equipment indicate that they have not successfully received and decoded the data packet.

In one embodiment, the transmitting the data packet occurs using resources on a downlink shared channel identified by a downlink physical control channel as being allocated to the group of user equipment. Hence, the downlink physical control channel may encode an indicator corresponding to the group of user equipment and identify where in the downlink shared channel the data packet for that group of user equipment is to be transmitted.

In one embodiment, the downlink shared channel comprises PDSCH, the downlink physical control channel comprises PDCCH and the group of user equipment is identified by a group identifier.

In one embodiment, the group identifier comprises a G-RNTI.

In one embodiment, the transmitting the indication occurs using RRC signalling. Accordingly, RRC signalling or the SIB may be utilized for providing the indication to provision the user equipment.

In one embodiment, the method comprises determining that only synchronised user equipment within the group of user equipment are to be allocated resources in the uplink channel where the reception indication is to be transmitted and wherein the indication identifies each group of user equipment using a group identifier for that group and the indication identifies a resource of the uplink channel which is a fixed number of sub-frames following receipt of the data packet corresponding with that group identifier transmitted on a downlink channel within which the reception indication is to be transmitted. Accordingly, when the base station determines that only synchronised user equipment are to be enabled or provisioned to transmit the reception indicator, then the indication identifies a resource in the uplink channel which is a fixed or selected number of subframes which follow from the subframe within which the data packet was received by the user equipment and within which the reception indicator is to be transmitted. It will be appreciated that network synchronised user equipment are typically connected user equipment, although some idle user equipment may retain synchronisation with the network and in some circumstances connected user equipment may be unsynchronised with the network. This effectively configures the user equipment and base station to reuse existing HARQ-like functionality, but for group communication.

In one embodiment, the uplink channel comprises PUCCH.

In one embodiment, the monitoring comprises monitoring for the HARQ NACK within resources in the PUCCH which are the fixed number of sub-frames following transmission of the data packet corresponding with that group identifier transmitted on the PDSCH.

In one embodiment, the method comprises determining that unsynchronised user equipment within the group of user equipment are to be allocated resources in the uplink channel where the reception indication is to be transmitted and wherein the indication identifies each group of user equipment using a group identifier for that group and the indication identifies a resource of the uplink channel following receipt of the data packet corresponding with that group identifier transmitted on a downlink channel within which the reception indication is to be transmitted. Accordingly, should unsynchronised user equipment also be enabled to provide the reception indication then resources are allocated in the uplink channel for the transmission of the reception indicator. Hence, the base station may monitor those resources instead or in addition to the resources allocated to connected user equipment. It will be appreciated that network unsynchronised user equipment are typically idle user equipment, although some connected user equipment maybe unsynchronised with the network and in some circumstances idle user equipment may be synchronised with the network. In one embodiment, even synchronised user equipment are allocated the resources to be used by the unsynchronised user equipment so that only those resources need be monitored.

In one embodiment, the indication identifies a unique preamble corresponding with each group of user equipment to be transmitted as the reception indication. Accordingly, a unique preamble may encode the reception indication.

In one embodiment, the uplink channel comprises PRACH and the indication identifies that the unique preamble is to be transmitted to indicate a HARQ NACK in next available resources of the PRACH following receipt of the data packet corresponding with that group identifier transmitted on the PDSCH. Hence, resources within the PRACH which follow the receipt of the data packet maybe allocated for transmission of the HARQ NACK.

In one embodiment, the monitoring comprises monitoring for the HARQ NACK within the next available resources of the PRACH following transmission of the data packet corresponding with that group identifier transmitted on the PDSCH.

According to a second aspect, there is provided a base station, comprising: transmission logic operable to transmit an indication to a group of user equipment within a cell supported by the base station, the indication identifying resources in an uplink channel where a reception indication is to be transmitted by the group of user equipment relating to data packets transmitted by the base station to the group of user equipment, the transmission logic being further operable to transmit a data packet to the group of user equipment within a cell supported by the base station; and monitoring logic operable to monitor the resources to determine a reception status of the data packet by the group of user equipment based on detection of the reception indication transmitted using the resources.

In one embodiment, a plurality of groups of user equipment are provided, the indication identifies each group of user equipment and resources of the uplink channel allocated to that group and the monitoring logic is operable to monitor the resources to determine a reception status of the data packets by each of the plurality of groups of user equipment based on detection of the reception indication transmitted using the resources allocated to that group.

In one embodiment, the base station comprises allocating logic operable to allocate the same resources for use by a set of groups of user equipment and wherein the transmitting logic is operable to transmit the indication to the set of groups of user equipment within the cell supported by the base station, the indication identifying resources in the uplink channel where a reception indication is to be transmitted relating to data packets transmitted by the base station to the set of groups of user equipment, the transmitting logic is operable to transmit a data packet to each of the set of groups of user equipment within the cell supported by the base station and the monitoring logic is operable to monitor the resources to determine a reception status of the data packets by the set of groups of user equipment based on detection of the reception indication transmitted using the resources allocated to the set of groups of user equipment.

In one embodiment, a plurality of processes are employed for transmitting a corresponding data packet for that process to each group of user equipment within a cell supported by the base station and the indication identifies each process for each group of user equipment and resources of the uplink channel allocated in the uplink channel where a reception indication is to be transmitted by the group of user equipment relating to data packets transmitted by the base station for that process to each group of user equipment.

In one embodiment, the monitoring logic is operable to combine signals received using the resource to determine presence of the reception indication.

In one embodiment, the reception indication comprises a HARQ NACK.

In one embodiment, the transmission logic is operable to re-transmit the data packet when the signals received using the resource exceed a threshold amount and otherwise transmit another data packet.

In one embodiment, the transmission logic is operable to transmit the data packet using resources on a downlink shared channel identified by a downlink physical control channel as being allocated to the group of user equipment.

In one embodiment, the downlink shared channel comprises PDSCH, the downlink physical control channel comprises PDCCH and the group of user equipment is identified by a group identifier.

In one embodiment, the group identifier comprises a G-RNTI.

In one embodiment, the transmission logic is operable to transmit the indication using RRC signalling.

In one embodiment, the base station comprises determining logic operable to determine that only synchronised user equipment within the group of user equipment are to be allocated resources in the uplink channel where the reception indication is to be transmitted and wherein the indication identifies each group of user equipment using a group identifier for that group and the indication identifies a resource of the uplink channel which is a fixed number of sub-frames following receipt of the data packet corresponding with that group identifier transmitted on a downlink channel within which the reception indication is to be transmitted.

In one embodiment, the uplink channel comprises PUCCH.

In one embodiment, the monitoring logic is operable to monitor for the HARQ NACK within resources in the PUCCH which are the fixed number of sub-frames following transmission of the data packet corresponding with that group identifier transmitted on the PDSCH.

In one embodiment, the base station comprises determining logic operable to determine that unsynchronised user equipment within the group of user equipment are to be allocated resources in the uplink channel where the reception indication is to be transmitted and wherein the indication identifies each group of user equipment using a group identifier for that group and the indication identifies a resource of the uplink channel following receipt of the data packet corresponding with that group identifier transmitted on a downlink channel within which the reception indication is to be transmitted.

In one embodiment, the indication identifies a unique preamble corresponding with each group of user equipment to be transmitted as the reception indication.

In one embodiment, the uplink channel comprises PRACH and the indication identifies that the unique preamble is to be transmitted to indicate a HARQ NACK in next available resources of the PRACH following receipt of the data packet corresponding with that group identifier transmitted on the PDSCH.

In one embodiment, the monitoring logic is operable to monitor for the HARQ NACK within the next available resources of the PRACH following transmission of the data packet corresponding with that group identifier transmitted on the PDSCH.

According to a third aspect, there is provided a user equipment method, comprising: receiving an indication for a group of user equipment within a cell supported by the base station to which the user equipment is subscribed, the indication identifying resources in an uplink channel where a reception indication is to be transmitted by the group of user equipment relating to data packets transmitted by the base station to the group of user equipment; receiving a data packet for the group of user equipment within a cell supported by the base station; and determining a reception status of the data packet.

In one embodiment, the method comprises transmitting the reception status using the resources.

In one embodiment, the method comprises transmitting the reception status using the resources when the data packet fails to be decodable.

In one embodiment, the reception indication comprises a HARQ NACK.

In one embodiment, the user equipment is subscribed to a plurality of groups of user equipment and the indication identifies each group of user equipment and resources of the uplink channel allocated to that group.

In one embodiment, a plurality of processes are employed for transmitting a corresponding data packet for that process to each group of user equipment within a cell supported by the base station and the indication identifies each process for each group of user equipment and resources of the uplink channel allocated in the uplink channel where a reception indication is to be transmitted by the group of user equipment relating to data packets transmitted by the base station for that process to each group of user equipment.

In one embodiment, the method comprises determining whether a received data packet to the group of user is a re-transmission and, if so, soft combining signals of the received data packet with signals of a previous data packet to assist decoding.

In one embodiment, the receiving the data packet occurs using resources on a downlink shared channel identified by a downlink physical control channel as being allocated to the group of user equipment.

In one embodiment, the downlink shared channel comprises PDSCH, the downlink physical control channel comprises PDCCH and the group of user equipment is identified by a group identifier.

In one embodiment, the group identifier comprises a G-RNTI.

In one embodiment, the receiving the indication occurs using RRC signalling.

In one embodiment, the indication identifies each group of user equipment using a group identifier for that group and the indication identifies a resource of the uplink channel which is a fixed number of sub-frames following receipt of the data packet corresponding with that group identifier transmitted on a downlink channel within which the reception indication is to be transmitted by connected user equipment.

In one embodiment, the uplink channel comprises PUCCH.

In one embodiment, the method comprises determining whether the user equipment is synchronised and, if so, the transmitting comprises transmitting the HARQ NACK within resources in the PUCCH which are the fixed number of sub-frames following transmission of the data packet corresponding with that group identifier transmitted on the PDSCH.

In one embodiment, the indication identifies each group of user equipment using a group identifier for that group and the indication identifies a resource of the uplink channel following receipt of the data packet corresponding with that group identifier transmitted on a downlink channel within which the reception indication is to be transmitted by idle user equipment.

In one embodiment, the indication identifies a unique preamble corresponding with each group of user equipment to be transmitted as the reception indication.

In one embodiment, the uplink channel comprises PRACH and the indication identifies that the unique preamble is to be transmitted to indicate a HARQ NACK in next available resources of the PRACH following receipt of the data packet corresponding with that group identifier transmitted on the PDSCH.

In one embodiment, the method comprises determining whether the user equipment is unsynchronised and, if so, the transmitting comprises transmitting the HARQ NACK within the next available resources of the PRACH following transmission of the data packet corresponding with that group identifier transmitted on the PDSCH.

According to a fourth aspect, there is provided user equipment, comprising: reception logic operable to receive an indication for a group of user equipment within a cell supported by the base station to which the user equipment is subscribed, the indication identifying resources in an uplink channel where a reception indication is to be transmitted by the group of user equipment relating to data packets transmitted by the base station to the group of user equipment, the reception logic being operable to receive a data packet for the group of user equipment within a cell supported by the base station; and determining logic operable to determine a reception status of the data packet.

In one embodiment, the user equipment comprises transmission logic operable to transmit the reception status using the resources.

In one embodiment, the transmission logic is operable to transmit the reception status using the resources when the data packet fails to be decodable.

In one embodiment, the reception indication comprises a HARQ NACK.

In one embodiment, the user equipment is subscribed to a plurality of groups of user equipment and the indication identifies each group of user equipment and resources of the uplink channel allocated to that group.

In one embodiment, a plurality of processes are employed for transmitting a corresponding data packet for that process to each group of user equipment within a cell supported by the base station and the indication identifies each process for each group of user equipment and resources of the uplink channel allocated in the uplink channel where a reception indication is to be transmitted by the group of user equipment relating to data packets transmitted by the base station for that process to each group of user equipment.

In one embodiment, the determining logic is operable to determine whether a received data packet to the group of user is a re-transmission of a previous data packet and, if so, soft combining signals of the received data packet with signals of the previous data packet to assist decoding.

In one embodiment, the reception logic is operable to receive the data packet using resources on a downlink shared channel identified by a downlink physical control channel as being allocated to the group of user equipment.

In one embodiment, the downlink shared channel comprises PDSCH, the downlink physical control channel comprises PDCCH and the group of user equipment is identified by a group identifier.

In one embodiment, the group identifier comprises a G-RNTI.

In one embodiment, the reception logic is operable to receive the indication using RRC signalling.

In one embodiment, the indication identifies each group of user equipment using a group identifier for that group and the indication identifies a resource of the uplink channel which is a fixed number of sub-frames following receipt of the data packet corresponding with that group identifier transmitted on a downlink channel within which the reception indication is to be transmitted by connected user equipment.

In one embodiment, the uplink channel comprises PUCCH.

In one embodiment, the determining logic is operable to determine whether the user equipment is synchronised and, if so, the transmission logic is operable to transmit the HARQ NACK within resources in the PUCCH which are the fixed number of sub-frames following transmission of the data packet corresponding with that group identifier transmitted on the PDSCH.

In one embodiment, the indication identifies each group of user equipment using a group identifier for that group and the indication identifies a resource of the uplink channel following receipt of the data packet corresponding with that group identifier transmitted on a downlink channel within which the reception indication is to be transmitted by idle user equipment.

In one embodiment, the indication identifies a unique preamble corresponding with each group of user equipment to be transmitted as the reception indication.

In one embodiment, the uplink channel comprises PRACH and the indication identifies that the unique preamble is to be transmitted to indicate a HARQ NACK in next available resources of the PRACH following receipt of the data packet corresponding with that group identifier transmitted on the PDSCH.

In one embodiment, the determining logic is operable to determine whether the user equipment is unsynchronised and, if so, the transmission logic is operable to transmit the HARQ NACK within the next available resources of the PRACH following transmission of the data packet corresponding with that group identifier transmitted on the PDSCH.

According to a fifth aspect, there is provided a computer program product operable, when executed on a computer, to perform the method of any one of the first or third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates general procedures for group scheduling;
Figure 2 illustrates HARQ transmission on PUCCH for single cell PTM; and
Figure 3 illustrates HARQ transmission on PRACH for single cell PTM.

### DESCRIPTION OF THE EMBODIMENTS

Before discussing the embodiments in any more detail, first an overview will be provided. Embodiments provide a hybrid automatic repeat request (HARQ) feedback mechanism for single cell point to multipoint (PTM) transmission for groups of user equipment within a cell. Each group of user equipment is allocated a resource within which user equipment within those groups may transmit a reception indicator which indicates whether the user equipment successfully decoded a multicast data packet intended for user equipment within that group or, preferably, not. Each user equipment within the group may transmit its reception indicator using the same resource as other user equipment within the group. This enables the network to be able to monitor that resource and take a view on whether sufficient user equipment within the group were able to correctly decode the data packet or not. If insufficient user equipment within the group were able to correctly decode the packet, then the network may retransmit that data packet and otherwise may transmit a further data packet for that group.

In embodiments, different resources are allocated for the transmission of the reception indicator by correspondingly different groups of user equipment. Likewise, where different processes are used, each transmitting a different data packet to a group of user equipment, then different resources for each of those different processes within the group may be allocated.

Where the number of processes or groups risks overwhelming the resources available, then the resources maybe shared between multiple groups or multiple processes so that the resource indicators are multiplexed for those groups or processes using the same resource.

If insufficient user equipment received a particular data packet for those multiple groups or multiple processes, then those data packets for those multiple groups for multiple processes maybe retransmitted.

The resources allocated for the reception indication may vary depending on whether the network wishes only network-synchronised user equipment or both network-synchronised and network-unsynchronised user equipment to be able to provide such feedback. Should only network-synchronised user equipment be required to provide the feedback then the group may be allocated resources which would normally be allocated for a single user equipment when implementing a HARQ-like mechanism. Should network-unsynchronised user equipment also be required to provide feedback then the network may allocate resources in a random access channel.

Typically, the resources in the random access channel will be scheduled later than those that would normally be available for the network-synchronised user equipment, and so the network may either monitor both the resources allocated to the network-synchronised and the network-unsynchronised user equipment before making a decision on whether to retransmit a data packet, or may provision even the network-synchronised user equipment to utilize the resources allocated to the network-unsynchronised user equipment and only monitor those resources.

For ease of understanding, the following description uses Radio Resource Control (RRC)_Connected user equipment as an example of network-synchronised user equipment and RRC_Idle user equipment as an example of network-unsynchronised user equipment, although it will be appreciated that RRC_Connected user equipment may also operate as network-unsynchronised user equipment and RRC_Idle user equipment may also operate as network-synchronised user equipment in some circumstances.

Hence, embodiments support hybrid automatic repeat request (HARQ) feedback for single cell point to multipoint (PTM) transmission by both Radio Resource Control (RRC)_Connected and RRC_Idle user equipment.

For RRC_Connected user equipment, the HARQ feedback mechanism is designed to transmit a HARQ NACKon an allocated Physical Uplink Control Channel (PUCCH) for a given group identified by a given group Radio Network Temporary Identifier (G-RNTI). In particular, the user equipment within a group (corresponding to the G-RNTI) are allowed to send a HARQ NACK upon the unsuccessful decoding of a data packet transmitted to all user equipment within that group; a HARQ NACK is not sent by the user equipment within the group who receive and decode the packet successfully.

All user equipment within the group who send the HARQ NACK do so on the allocated resources for that G-RNTI. Therefore, the transmissions by a group of user equipment are accumulated over the air interface. Even though the base station (eNB) is unable to identify the individual user equipment which did not receive the packet correctly, the base station can re-transmit the whole packet using single cell PTM if not delivered correctly to some user equipment.

Given that there may be a large number of groups and hence a large number of G-RNTIs, a large amount of radio resources may be needed on PUCCH for group HARQ NACK feedback. In order to minimize the amount of PUCCH resources required for group communication, groups are multiplexed together as sets of groups and those sets of groups share the HARQ feedback channel (i.e. the PUCCH resources are shared by multiple groups). In some cases, upon reception of the HARQ NACK by the base station, the base station may require to re-transmit packets for a number of groups (a number of G-RNTIs) of user equipment.

For RRC_Idle user equipment, these user equipment are not uplink synchronized to the network and so HARQ feedback is sent on the Random Access Channel (RACH). Similar to the HARQ design for RRC_Connected user equipment, only a HARQ NACK is transmitted by the user equipment upon the unsuccessful decoding of a data packet transmitted to all user equipment within that group; a HARQ NACK is not sent by the user equipment within the group who receive and decode the packet successfully.

For RRC_Idle user equipment, a dedicated RACH preamble is allocated for each G-RNTI. If the packet is unsuccessfully decoded, the user equipment send the allocated dedicated preamble in a given uplink physical random access channel (PRACH) location to indicate the unsuccessful reception of the packet to the base station. In order to minimize the resources required for a large number of potential groups, the groups are multiplexed for the transmission of the HARQ feedback (i.e. a RACH preamble is shared by a several groups of user equipment for HARQ feedback).

### Single Cell Point to Multipoint Group Communication

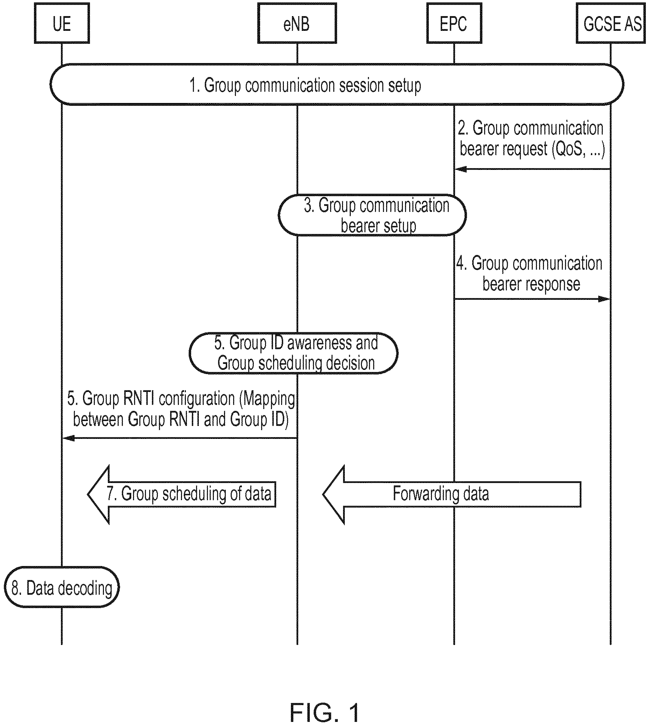

Figure 1 shows the general procedures for group scheduling, including the high-level interactions between different entities involved in the group communication. A possible realization of single cell PTM is described in R2-140265. With the group scheduling scheme, all the users within a cell that are interested to participate in the same Group Communication System Enablers (GCSE) group will be assigned with a common G-RNTI. These users will then be scheduled by the base station with the G-RNTI, thus the group communication data is delivered via shared radio resources to multiple group members.

At step 1, the user equipment initiates a group communication setup for a particular GCSE group using application level signalling. The GCSE application server (AS) performs the authorization.

At steps 2 to 4, as per the request from the GCSE AS, the evolved packet core (EPC) and base station setup the bearer in downlink for the group communication. If there are multiple users interested in the same GCSE group, a common bearer might be used.

At step 5, the base station acquires the information regarding which GCSE group(s) each UE is interested to participate in. The base station could get such information either from evolved packet core or from a user equipment report. For a particular GCSE group, depending on the number of interested user equipment, the base station decides which scheduling scheme to use, i.e. point to point (PtP) or point to multipoint (PtM) - i.e. group scheduling.

At step 6, if the base station decides to use group scheduling for a particular GCSE group, the base station configures the G-RNTI as well as the mapping between the G-RNTI and the corresponding GCSE group identifier of the group members. The configuration could be achieved by either dedicated RRC signalling or shared RRC signalling (such as using the System Information Block (SIB) or by paging).

At step 7, the base station performs group scheduling for the GCSE group. The Physical Downlink Control Channel (PDCCH) for downlink radio resource assignment is scrambled using the corresponding G-RNTI. The group communication data is then provided over the Physical Downlink Shared Channel (PDSCH) using resources specified in the PDCCH.

At step 8, the user equipment decodes the group communication data. Support of HARQ feedback allows for an indication of successful or unsuccessful decoding of the data.

As mentioned above, HARQ for single cell PTM can occur under two conditions which are: 1) Only RRC_Connected user equipment are served with single cell PTM; and 2) both RRC_Connected and RRC_Idle user equipment are served with single cell PTM. Typically, a decision is made either within the base station, AS or EPC as to whether to support HARQ feedback for just RRC_Connected user equipment or for both RRC_Connected and RRC_Idle user equipment and the user equipment is configured using either SIB or RRC signalling to either provide HARQ feedback when only RRC_Connected, or when both RRC_Connected and RRC_Idle.

### Only RRC Connected user equipment are served with single cell PTM

HARQ feedback is sent on PUCCH resources for unicast downlink transmission in legacy systems. PUCCH provides resources for the RRC_Connected UE. In order to minimize the resources needed for transmission of control signals, the PUCCH in long term evolution (LTE) networks is designed to exploit frequency diversity. Where one subframe comprises a single (0.5 ms) radio block at or near one edge of the system bandwidth, and the other half of the (0.5 ms) subframe is located the opposite end of the system bandwidth. A number of user equipment are multiplexed on the PUCCH using code division multiplexing (CDM). Each CDM code represents a UE identified by a C-RNTI in the cell. These resources are reused when using single cell PTM and the group is identified in the cell using a G-RNTI. The G-RNTI represents a group of user equipment in the cell. G-RNTIs are differentiated and multiplexed on PUCCH using CDM codes similar to the user equipment differentiation for unicast HARQ feedback.

The PUCCH configuration for HARQ feedback for the G-RNTI is provided to the user equipment, together with a mapping between the G-RNTI and a Group ID. Either dedicated RRC signalling or shared RRC signalling (broadcast using SIB, or another dedicated G-RNTI on the downlink shared channel (DLSCH)).

The user equipment within the group decode the data delivered for their G-RNTI. If the decoding is not successful, then the user equipment transmits a HARQ NACK on the corresponding PUCCH channel for the G-RNTI.

The time between the reception of the data block or packet and the HARQ feedback on the PUCCH can be kept same as for unicast, where 4ms is used in the legacy LTE system, although other feedback timings are possible. A fixed timing between reception of data and HARQ feedback therefore provided.

As all the RRC_Connected user equipment are uplink synchronized to the base station, any transmitted HARQ NACKs on the PUCCH are constructively combined over the air interface. At the base station, the base station detects the energy of the PUCCH and the NACK can be identified. If a NACK is received, then the base station may determine which data packet(s) were not successfully decoded (i.e. the data packet(s) transmitted 4ms or other fixed timing earlier) and re-transmit the data packet(s) to the whole group using the G-RNTI.

Whether the data packet is a first transmission or a re-transmission is indicated in the PDCCH addressed to the G-RNTI through encoding. If the data packet is a re-transmission packet, the user equipment whose decoding was unsuccessful will perform HARQ combining of the received re-transmission with the data in the soft buffer.

The legacy LTE unicast uses up to 8 HARQ process for the user equipment. If similar HARQ procedure is used in embodiments, each G-RNTI may have up to 8 HARQ processes. Additionally, user equipment may belong to multiple groups and hence may monitor multiple G-RNTIs. Having 8 HARQ processes per G-RNTI is processing-intensive for the user equipment.

A simplification can be realized by allowing only 1 HARQ process per G-RNTI. This means that the network can only transmit one data packet per G-RNTI within a HARQ round trip time (RTT). The base station would need to wait for the HARQ feedback before transmitting the next packet for the G-RNTIs.

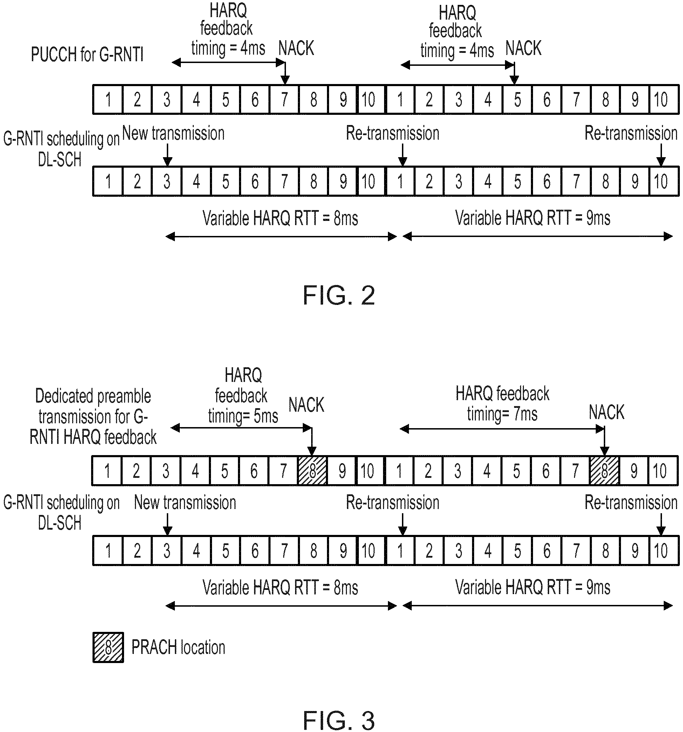

Figure 2 shows an illustration of HARQ feedback on PUCCH for single cell PTM.

Even with the HARQ process simplification proposed above, there may be hundreds of active groups in a cell. This would require a very large PUCCH resource space if a dedicated PUCCH channel per G-RNTI is configured.

In order to mitigate the required large PUCCH resource space, the same PUCCH resources may be shared by a multiple G-RNTIs. Note that the number of G-RNTIs that can be scheduled in a subframe is limited by the maximum number of allowed PDCCHs in a subframe, which is typically in the range of 7-13, depending on the bandwidth of the system.

The use of the shared PUCCH channel by multiple G-RNTIs exploits the limited PDCCH. Hence, most of the time, scheduling of more than one G-RNTI allocated with the same PUCCH resources in a subframe can be avoided by network scheduling. In a rare case, if more than one G-RNTI is allocated with the same PUCCH resources scheduled, the user equipment receiving any G-RNTIs will provide the HARQ NACK (if required) on the allocated shared PUCCH resource. The network may take a decision to retransmit the data packets to all of the G-RNTIs or drop all re-transmission, or only re-transmit the data packets to selected G-RNTIs. All of the re-transmission decisions are left to the network implementation.

### Both RRC Connected and RRC Idle user equipment are served with single cell PTM

Given that RRC_Idle user equipment are typically not uplink synchronized to the base station, RRC_Idle user equipment cannot transmit signals on PUCCH. Therefore, the HARQ feedback mechanism designed above for RRC_Connected user equipment cannot be used for RRC_Idle user equipment. The only transmission allowed in uplink by an RRC_Idle user equipment is on the Random Access Channel (RACH). Therefore, the RACH is used to deliver the HARQ feedback for single cell PTM of RRC_Idle user equipment.

Each G-RNTI is provided with an associated dedicated preamble (and optionally time and frequency location of PRACH) for the transmission of the HARQ feedback. Only the HARQ NACK is transmitted. If the user equipment within a group are unsuccessful in decoding the data for the G-RNTI, the user equipment transmits the dedicated preamble in the next PRACH location or RACH allocation as provided in the configuration.

Given that there is no PRACH in each subframe, the user equipment needs to wait until the next PRACH location for the transmission of HARQ. Therefore, the time between the reception of data and the HARQ feedback is variable as shown in Figure 3.

If the same data is scheduled more than one time for the same G-RNTI between two PRACH occurrences, another parameter is required to differentiate the HARQ processes for G-RNTI. A simplification is to allow only one HARQ process per G-RNTI between two PRACH occurrences.

Another issue is the large number of G-RNTIs used in a cell. The dedicated RACH preamble can be configured to be shared between multiple groups for the transmission of HARQ feedback, thus enabling efficient PRACH resource usage.

An illustration of HARQ feedback on RACH for single cell PTM is provided in Figure 3.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station method, comprising:
transmitting an indication to a group of user equipment within a cell supported by said base station, said indication identifying resources in an uplink channel where a reception indication is to be transmitted by said group of user equipment relating to data packets transmitted by said base station to said group of user equipment;
transmitting a data packet to said group of user equipment within a cell supported by said base station; and
monitoring said resources to determine a reception status of said data packet by said group of user equipment based on detection of said reception indication transmitted using said resources.

2. The method of claim 1, wherein a plurality of groups of user equipment are provided, said indication identifies each group of user equipment and resources of said uplink channel allocated to that group and said monitoring comprises monitoring said resources to determine a reception status of said data packets by each of said plurality of groups of user equipment based on detection of said reception indication transmitted using said resources allocated to that group.

3. The method of claim 1 or 2, comprising allocating the same resources for use by a set of groups of user equipment and wherein:
said transmitting said indication comprises transmitting said indication to said set of groups of user equipment within said cell supported by said base station, said indication identifying resources in said uplink channel where a reception indication is to be transmitted relating to data packets transmitted by said base station to said set of groups of user equipment;
said transmitting said data packet comprises transmitting a data packet to each of said set of groups of user equipment within said cell supported by said base station; and
said monitoring comprises monitoring said resources to determine a reception status of said data packets by said set of groups of user equipment based on detection of said reception indication transmitted using said resources allocated to said set of groups of user equipment.

4. The method of any preceding claim, wherein a plurality of processes are employed for transmitting a corresponding data packet for that process to each group of user equipment within a cell supported by said base station and said indication identifies each process for each group of user equipment and resources of said uplink channel allocated in said uplink channel where a reception indication is to be transmitted by said group of user equipment relating to data packets transmitted by said base station for that process to each group of user equipment.

5. The method of any preceding claim, wherein said transmitting said data packet occurs using resources on a downlink shared channel identified by a downlink physical control channel as being allocated to said group of user equipment.

6. The method of claim 5, wherein said downlink shared channel comprises PDSCH, said downlink physical control channel comprises PDCCH and said group of user equipment is identified by a group identifier.

7. The method of any preceding claim, wherein said indication identifies each group using a G-RNTI.

8. The method of any preceding claim, comprising determining that only synchronised user equipment within said group of user equipment are to be allocated resources in said uplink channel where said reception indication is to be transmitted and wherein said indication identifies each group of user equipment using a group identifier for that group and said indication identifies a resource of said uplink channel which is a fixed number of sub-frames following receipt of said data packet corresponding with that group identifier transmitted on a downlink channel within which said reception indication is to be transmitted.

9. The method of any preceding claim, comprising determining that unsynchronised user equipment within said group of user equipment are to be allocated resources in said uplink channel where said reception indication is to be transmitted and wherein said indication identifies each group of user equipment using a group identifier for that group and said indication identifies a resource of said uplink channel following receipt of said data packet corresponding with that group identifier transmitted on a downlink channel within which said reception indication is to be transmitted.

10. The method of claim 9, wherein said indication identifies a unique preamble corresponding with each group of user equipment to be transmitted as said reception indication.

11. The method of claim 9 or 10, wherein said uplink channel comprises PRACH and said indication identifies that said unique preamble is to be transmitted to indicate a HARQ NACK in next available resources of said PRACH following receipt of said data packet corresponding with that group identifier transmitted on said PDSCH.

12. Abase station, comprising:
transmission logic operable to transmit an indication to a group of user equipment within a cell supported by said base station, said indication identifying resources in an uplink channel where a reception indication is to be transmitted by said group of user equipment relating to data packets transmitted by said base station to said group of user equipment, said transmission logic being further operable to transmit a data packet to said group of user equipment within a cell supported by said base station; and
monitoring logic operable to monitor said resources to determine a reception status of said data packet by said group of user equipment based on detection of said reception indication transmitted using said resources.

13. A user equipment method, comprising:
receiving an indication for a group of user equipment within a cell supported by said base station to which said user equipment is subscribed, said indication identifying resources in an uplink channel where a reception indication is to be transmitted by said group of user equipment relating to data packets transmitted by said base station to said group of user equipment;
receiving a data packet for said group of user equipment within a cell supported by said base station; and
determining a reception status of said data packet.

14. User equipment, comprising:
reception logic operable to receive an indication for a group of user equipment within a cell supported by said base station to which said user equipment is subscribed, said indication identifying resources in an uplink channel where a reception indication is to be transmitted by said group of user equipment relating to data packets transmitted by said base station to said group of user equipment, said reception logic being operable to receive a data packet for said group of user equipment within a cell supported by said base station; and
determining logic operable to determine a reception status of said data packet.

15. A computer program product operable, when executed on a computer, to perform the method of any one of claims 1 to 11 and 13.
